# FASCICULE DE BREVET EUROPEEN

(11) **EP 1 258 140 B1**
(45) Date de publication et mention de la délivrance du brevet: **12.07.2006**
(21) Numéro de dépôt: 01907838.5
(22) Date de dépôt: 19.02.2001
(51) Int. Cl.: H04N 5/782

(54) **PROCEDE DE VISUALISATION D'EMISSIONS AUDIOVISUELLES DIFFUSEES ET DISPOSITIF DE VISUALISATION ASSOCIE**
VERFAHREN ZUM SICHTBAR MACHEN VON AUDIOVISUELLEN FERNSEHSENDUNGEN UND ZUGEORDNETES SICHTGERÄT
METHOD FOR VISUAL DISPLAY OF BROADCAST AUDIO-VISUAL PROGRAMMES AND ASSOCIATED VISUAL DISPLAY DEVICE

(30) Priorité: 25.02.2000 FR 0002409
(43) Date de publication de la demande: 20.11.2002
(73) Titulaire: Thomson Licensing, 92100 Boulogne-Billancourt (FR)
(72) Inventeur: COSMAO, Michel, F-92100 Boulogne Billancourt (FR); CHEVALLIER, Louis, F-92100 Boulogne Billancourt (FR)
(74) Mandataire: Kohrs, Martin
(86) Numéro de dépôt international: PCT/FR2001/000480
(87) Numéro de publication internationale: WO 2001/065844

(56) Documents cités:
- EP-A- 0 942 600
- WO-A-97/36422

## Description

L'invention concerne la diffusion et la réception d'émissions audiovisuelles diffusées par un émetteur et plus particulièrement un procédé de visualisation, et un dispositif d'acquisition, de mémorisation et de visualisation d'émissions audiovisuelles.

L'invention s'applique plus particulièrement aux récepteurs/décodeurs de télévision numérique, appelés plus simplement par la suite « décodeurs ». Le réseau diffuse des émissions audiovisuelles plus communément appelées « événements » et des données destinées à les référencer. Ces données sont par exemple définies dans les spécifications DVB-SI ('Digital Video Broadcast - specification for Service Information') ou encore 'diffusion de vidéo numérique - spécification des Données de Service' EN 300 468 V1.3.1 (éditée par l'ETSI). Elles se présentent sous la forme de tables et de descripteurs qui décrivent les objets émis sur le réseau de diffusion. Un service est une suite ininterrompue d'événements diffusés sur un flux déterminé.

Typiquement, on trouve dans les flux conformes au standard DVB-SI les tables suivantes : NIT. SDT, EIT et éventuellement BAT. La table NIT définit la structure générale du réseau et indique la liste des flux de transport et des services diffusés. La table SDT donne des informations supplémentaires relatives aux services, par exemple le nom en clair d'un service. La table EIT indique une liste d'événements pour chaque service Elle permet notamment d'indiquer l'événement en cours de diffusion. La table BAT rassemble quant à elle plusieurs services en un bouquet de services qui peuvent être issus de plusieurs réseaux de diffusion.

A l'aide des données contenues dans ces tables, le décodeur est capable de rechercher le flux qui diffuse l'événement désiré par l'utilisateur. Un logiciel appelé « Guide Electronique de Programme » (EPG en abrégé) affiche les caractéristiques des événements diffusés tels que le titre, le thème, un résumé, l'heure de diffusion. Il facilite ainsi le choix de l'utilisateur.

En cas d'absence de l'utilisateur, le décodeur peut enregistrer l'événement. Il dispose pour cela d'un disque dur qui mémorise les émissions audiovisuelles sous un format compressé. Un menu permet ensuite d'afficher le contenu de la mémoire.

Un système d'enregistrement d'émissions audiovisuelles à l'aide d'un PC est décrit dans la demande de brevet internationale WO97/36422. Ce système utilise un PC comme moyen de contrôle d'un magnétoscope pour le stockage des émissions. Une table affichée sur un écran présente à l'utilisateur les différents enregistrements effectuées. L'utilisateur peut alors choisir celui qu'il veut voir. Un autre système d'enregistrement est décrit dans la demande de brevet européen EP 942 600. Ce système présente la particularité d'enregistrer les émissions sur un disque optique. Le système contient une table permettant de déterminer l'adresse sur le disque des différentes émissions senregistrées.

Ces différents systèmes montrent qu'avec l'accroissement de la capacité mémoire des récepteurs d'émissions audiovisuelles, l'utilisateur peut enregistrer de plus en plus d'événements. Dès lors, l'étape de sélection parmi la liste d'événements en mémoire devient longue. Il importe donc de l'optimiser.

L'invention est définie par les revendications 1 et 9.

Ainsi l'invention permet à l'utilisateur de visualiser directement les événements enregistrés sans l'obliger à chaque fois à sélectionner chaque enregistrement. La sélection est effectuée préalablement au cours d'une étape de configuration et reste active pour toutes les demandes de visualisation jusqu'à la prochaine étape de configuration. L'invention permet de créer de véritables chaînes personnalisées où la visualisation des enregistrements s'effectue selon un séquencement conforme aux préférences d'un utilisateur. Une chaîne personnalisée peut correspondre à un utilisateur. On peut également configurer une chaîne personnalisée pour une catégorie d'utilisateur, les enfants par exemple, ou pour un objet déterminé, les films par exemple, ou encore pour visualiser uniquement des événements courts, des publicités par exemple.

Selon un mode de réalisation, la visualisation des enregistrements est facilitée par des moyens de navigation associés à des commandes utilisateur tels que : avance rapide, retour rapide, visualisation de l'enregistrement suivant, visualisation de l'enregistrement précédent.

D'autres caractéristiques et avantages de la présente invention ressortiront de la description des exemples de réalisation qui vont suivre, pris à titre d'exemples non limitatifs, en référence aux figures annexées dans lesquelles :
- la figure 1 représente un décodeur mettant en oeuvre l'invention,
- la figure 2 représente un organigramme des différentes étapes du procédé selon l'invention
- la figure 3 montre un menu de configuration d'une chaîne personnalisée,
- la figure 4 représente le contenu d'une partie de la mémoire selon l'invention,
- la figure 5 montre un menu de visualisation d'une chaîne personnalisée,
- la figure 6 est un chronogramme des visualisations d'enregistrements.

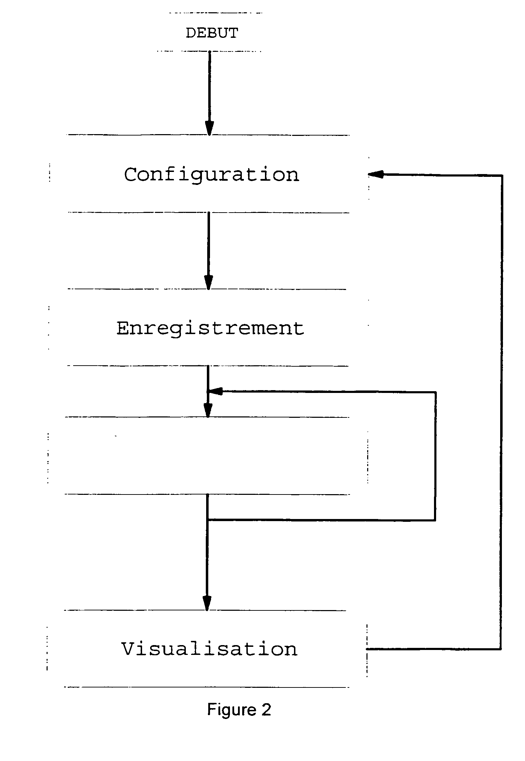

On décrira tout d'abord un décodeur selon l'invention. Puis, comme le représente la figure 2, on décrira les différentes étapes de l'invention, à savoir : une étape de configuration d'une chaîne personnalisée, une étape d'enregistrement des événements sélectionnés, une étape de mise à jour de certains enregistrements dits « récurrents » et une étape de visualisation des enregistrements.

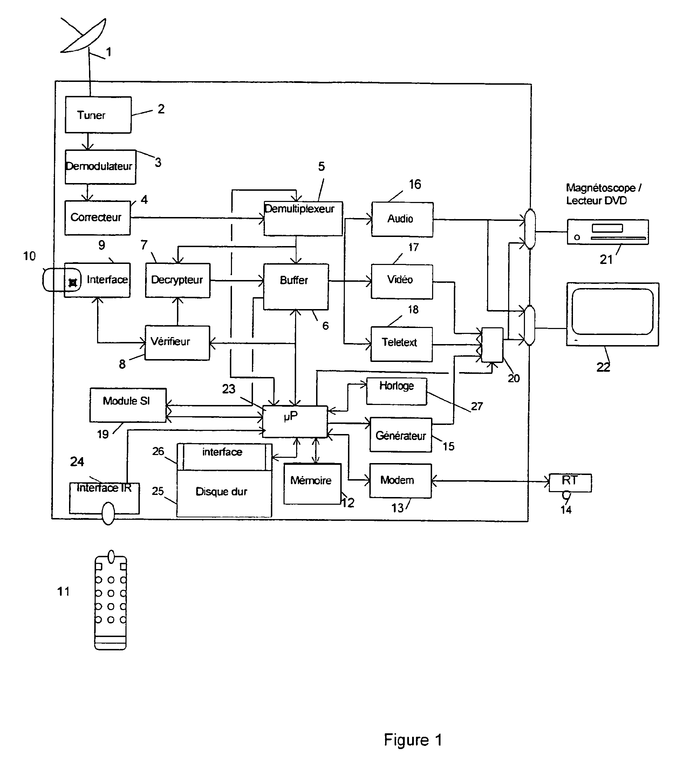

Un récepteur selon l'invention est décrit à la figure 1. Le récepteur est par exemple, un décodeur conforme aux spécifications DVB et qui utilise une couche transport ISO/IEC 13818-1.

Le récepteur est relié à une antenne 1, elle-même reliée à un syntoniseur (appelé également « tuner ») du décodeur. Le signal fourni par le tuner est démodulé par un démodulateur 3. Les données démodulées sont désentrelacées et corrigées par un circuit correcteur d'erreur 4 et transmises à un démultiplexeur 5. Celui-ci comporte un certain nombre de filtres programmés par un microprocesseur 23 en fonction des diverses applications supportées par le récepteur. Le microprocesseur 23 est connecté à une mémoire 12 comportant le système d'exploitation ainsi que les programmes résidents ou téléchargés de mise en oeuvre d'applications telles qu'un EPG. La mémoire est illustrée sous la forme d'un bloc unique, mais peut physiquement comporter plusieurs blocs de nature différente : mémoire vive RAM, mémoire morte ROM, mémoire reprogrammable EEPROM ou FLASH. Le microprocesseur est également connecté à un circuit d'horloge 27. Un générateur de caractères 15 permet la génération de menus de commande ou de graphiques relatifs aux paramètres du récepteur ou à une application particulière. Le signal vidéo généré est multiplexé avec l'un des signaux vidéo en provenance du décodeur vidéo 17 vers une prise Péritel (prise SCART en anglais) reliée à un téléviseur 22. Le circuit de multiplexage 20 est géré par le microprocesseur 23. Pour la clarté du schéma, seules les connexions les plus importantes du microprocesseur 23 sont illustrées.

Les sections ou paquets audio ou vidéo filtrés par le démultiplexeur sont stockés dans des zones prédéfinies d'une mémoire tampon 6. Le récepteur comporte également un disque dur 25 relié au microprocesseur à l'aide d'une interface 26 permettant des transferts rapides d'informations. Le disque dur est avantageusement intégré au décodeur, il peut être proposé sous la forme d'un équipement à part. Le support du disque peut éventuellement être amovible. La capacité du disque permet d'enregistrer au moins plusieurs heures d'émissions audiovisuelles dans un format compressé (MPEG 2 par exemple). Le récepteur est aussi doté d'une télécommande 24, reliée au microprocesseur par une liaison infrarouge. Cette télécommande est dotée de touches spécifiques à la gestion d'une chaîne personnalisée, elle possède entre autres les touches « CONFIGURATION CHAINE » et « LECTURE CHAINE ».

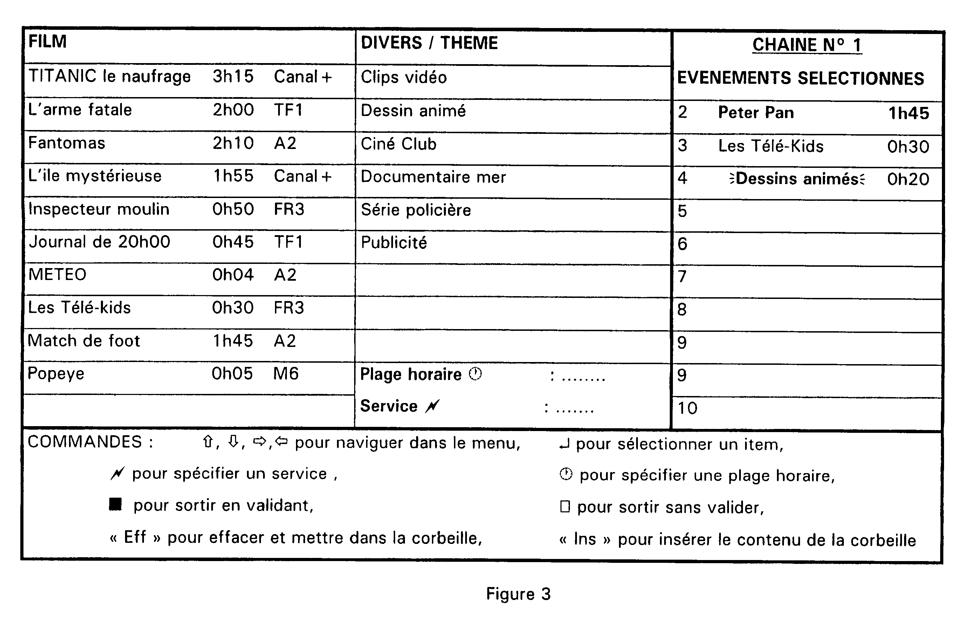

Dans un premier temps, l'utilisateur spécifie ses choix au cours d'une étape de configuration de sa chaîne personnalisée. L'utilisateur lance le logiciel de configuration à l'aide de la touche CONFIGURATION CHAINE de sa télécommande ou en sélectant une fonction dans un menu de travail. Dans un premier temps, le logiciel demande à l'utilisateur d'introduire un identificateur de chaîne personnalisée « IDENT ». Cet identificateur est un chiffre de 0 à 9, 2 par exemple. Après la validation de l'identificateur, le logiciel de configuration affiche sur l'écran du téléviseur le menu de configuration représenté à la figure 3. Cet écran propose à l'utilisateur de sélectionner des événements annoncés dans les tables EIT. De façon particulièrement avantageuse l'affichage des événements s'effectue à l'aide d'un Guide Electronique de Programme (EPG en abrégé). Un EPG est un logiciel qui analyse les tables diffusées selon les standards du DVB-SI et extrait des informations qui donnent à l'utilisateur des renseignements sur les différents événements en cours ou à venir.

L'EPG présente dans un menu les événements en indiquant le titre, la durée et le service diffusant l'événement. L'utilisateur navigue dans ce menu à l'aide des touches de sa télécommande correspondant aux flèches : ←, →, ↓ et ↑. Il positionne ainsi le curseur sur l'événement souhaité et appuie sur la touche « validation » pour le sélectionner. L'EPG présente également des thèmes d'événements que l'utilisation peut sélectionner, par exemple : « Documentaire sur la mer », « dessin animé », « publicité » ou « série policière ». L'utilisateur peut aussi spécifier un événement sous la forme d'une plage horaire d'un service déterminé. Il sélectionne alors l'option « Plage Horaire / Service » et introduit manuellement sur sa télécommande le jour, l'heure et le canal de son choix. Dans tous les cas et de façon optionnelle, il peut programmer la durée de l'enregistrement en appuyant sur une touche de fonction.

Les sélections s'affichent sur la colonne de droite, un numéro d'ordre est affecté à chaque sélection. Au début, le logiciel de configuration affiche la liste des sélections effectuées lors de la précédente exécution. Avantageusement, l'écran indique si l'événement sélectionné a été enregistré (sélection en gras) et sa durée effective et si l'événement est en cours d'enregistrement (clignotement). Lorsque l'utilisateur navigue dans sa liste des sélections, des fonctions supplémentaires lui sont offertes telles que effacement d'une sélection, déplacement d'une sélection, modification d'une sélection, ...etc. Chaque mouvement d'un élément de la liste entraîne une re-numérotation des éléments au sein de la chaîne personnalisée, et éventuellement, une libération de la place mémoire occupée par un enregistrement consécutivement à une demande d'effacement de la sélection correspondante. Une commande d'effacement effectuée juste après l'introduction de l'identifiant d'une chaîne personnalisée entraîne sa suppression et la libération de toute la zone mémoire occupée par ses données. Enfin, une fonction permet à l'utilisateur de clore la liste de ses sélections. Le logiciel termine alors son exécution en mettant à jour la mémoire non volatile avec les données issues de l'étape de configuration.

Dans l'exemple illustré par la figure 3, la chaîne personnalisée 1 comprend les sélections suivantes : en premier « Peter Pan » (la sélection est enregistrée, durée : 1h45), en second « Les télé-Kids » (la sélection n'est pas enregistrée, la durée affichée est celle désirée par l'utilisateur), en troisième des dessins animés (la sélection est en cours d'enregistrement, l'utilisateur a demandé 20 minutes).

Dans un premier mode de réalisation, l'utilisateur appuie sur des touches spécifiques pour exécuter les commandes, les touches étant par exemple sur sa télécommande. Un autre mode consiste en ce que l'écran affiche un bandeau doté d'icônes correspondants aux différentes fonctions que l'utilisateur active en les sélectionnant à l'aide des flèches de sa télécommande et d'une touche « VALIDATION ».

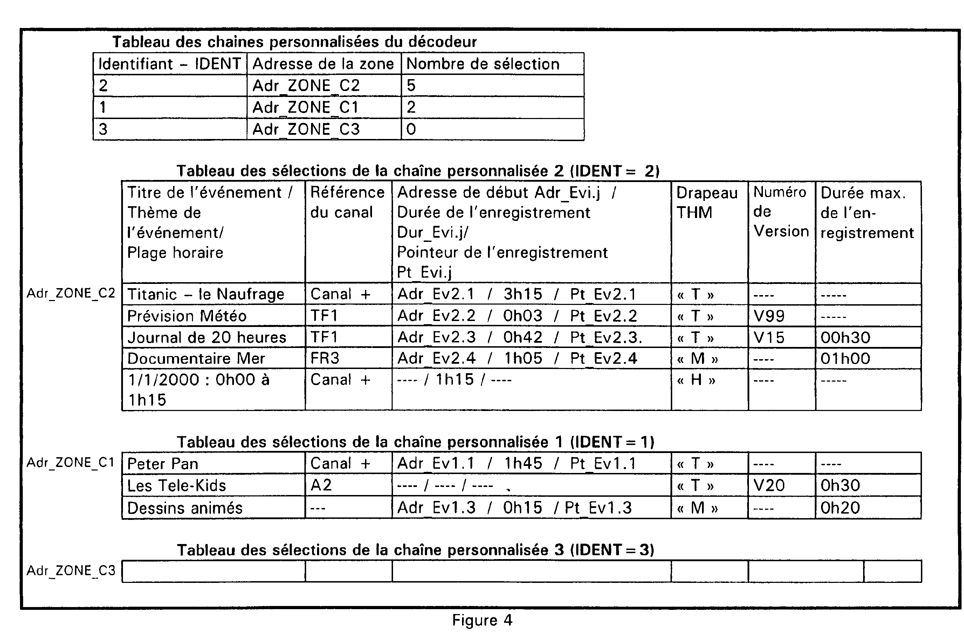

Les données issues de l'étape de configuration sont stockées dans les tableaux représentés à la figure 4. Un premier tableau appelé « Tableau des chaînes » indexe les zones de données réservées pour chaque chaîne personnalisée. Ce premier tableau contient des triplets comprenant : l'identificateur de chaîne personnalisée (dans l'exemple : un chiffre de 0 à 9), l'adresse du tableau contenant les données de cette chaîne et le nombre d'événements sélectionnés pour cette chaîne.

Les autres tableaux appelés « Tableau des sélections » ou TAB-Ci contiennent les données de référence des sélections d'une chaîne. Le tableau possède les champs suivants :
- identifiant de l'événement,
- identifiant du canal,
- durée programmée de l'événement,
- drapeau Titre/Horaire /thèMe (THM),
- données d'adressage et d'enregistrement.

Les données dans le tableau des sélections sont stockées dans l'ordre spécifié par l'utilisateur. L'indice de l'élément dans le tableau constitue un numéro d'ordre. En variante le tableau contient une autre colonne indiquant le numéro d'ordre, les éléments peuvent alors être inscrits dans n'importe quel ordre. On peut également utiliser une structure chaînée : chaque élément du tableau spécifie la référence de l'élément suivant et de l'élément précédent.

L'identifiant de l'événement est soit son titre, soit son numéro d'identification pour le diffuseur (numéro sur 8 octets par exemple) soit un thème d'émission, soit une combinaison d'une référence d'un service et d'une plage horaire. Le choix entre ces trois possibilités est déterminé par l'état du drapeau THM. Ce drapeau prend la valeur « T » si l'événement est sélectionné par son titre, « H » si l'événement est sélectionné par sa plage horaire sur un service déterminé « M » si l'événement est sélectionné par son thème. La durée d'enregistrement de l'événement est optionnelle, la valeur dans ce champ est initialisé à « 0000 » et reste à cette valeur si l'utilisateur n'utilise pas cette option. Les données d'adressage et d'enregistrement sont :
- l'adresse de début de l'enregistrement « Adr_Evi.j »,
- la valeur du pointeur au moment de l'enregistrement « Pt_Evi.j »,
- la durée de l'enregistrement « Dur_Evi.j »,
- éventuellement, un numéro de version de l'événement.

Le logiciel de configuration crée autant de tableaux des sélections qu'il y a de chaînes personnalisées. La figure 4 présente les tableaux de trois chaînes personnalisées dont une (le numéro 3) ne contient pas encore de sélections.

L'étape de configuration d'une chaîne personnalisée étant terminée, le décodeur lance une routine de programmation du démultiplexeur pour détecter l'apparition dans les flux des différents événements sélectionnés et en faire l'enregistrement dans le disque dur du décodeur. Si l'événement est sélectionné par le titre ou le thème, les données fournies par les tables du DVB-SI fournissent à la routine de programmation les informations (numéro du service, heure de diffusion) permettant de le rechercher. Si l'événement est sélectionné par une plage horaire, le décodeur programme son horloge avec l'heure de début de cette plage horaire. Au moment déterminé, il enregistre les données émises dans le service spécifié par l'utilisateur.

L'enregistrement d'un événement dans un disque dur s'effectue selon une technique bien connue qu'il est donc inutile de décrire. L'enregistrement s'effectue à partir de l'adresse (Adr_Evi.j) déterminée au début de l'enregistrement par le logiciel de gestion du disque dur, ce logiciel étant intégré à l'interface 26. Si la valeur Adr_Evi.j est nulle, l'événement n'est pas enregistré. Les événements étant multiplexés, des pointeurs (Pt_Evi.j) définissent l'adresse d'écriture au cours de l'enregistrement. Lorsque l'événement est totalement enregistré, la valeur du pointeur est initialisé à celle de ADR_Evi.j. Si la valeur n'est pas nulle, et si la valeur de Pt_Evi.j est différente de celle de Adr_Evi.j, alors l'événement est en cours d'enregistrement.

La durée de l'enregistrement est spécifiée par l'utilisateur. S'il ne le fait pas, la durée est celle de l'événement diffusé. Si l'utilisateur spécifie un événement par son titre ou son thème et que la durée qu'il spécifie dépasse la durée d'un premier enregistrement, le décodeur peut enregistrer au moins le début d'un second événement correspondant aux critères. Par exemple, si l'utilisateur demande 20 minutes d'enregistrement de « Dessin animé » et que les diffusions de tels événements durent 5 minutes, le décodeur peut enregistrer 4 événements correspondant à ce thème. De façon avantageuse, la zone mémoire configurée pour enregistrer la durée spécifiée par l'utilisateur est gérée cycliquement. Ainsi, la mémoire contient toujours les derniers événements diffusés correspondants aux choix de l'utilisateur. A la fin de chaque enregistrement, le numéro de version, s'il existe, et la durée effective de l'enregistrement (Dur_Evi.j) sont écrits dans le tableau.

La mise à jour d'un enregistrement est effectué lorsque l'événement correspondant est récurrent. Le diffuseur d'émissions audiovisuelles fournit dans un champ spécifique une indication de la récurrence ou non de l'événement. S'il est récurrent, il est associé à un numéro de version qui change chaque fois que le contenu de l'événement évolue. Dans ce cas, lors de chaque enregistrement, le numéro de version est mis à jour dans le tableau des sélections.

Les événements sont habituellement diffusés plusieurs fois à l'identique selon la technique du carrousel. Si un événement n'est pas récurrent, il n'est enregistré que lors de la première diffusion reçue par le décodeur. Après l'enregistrement de cet événement, le démultiplexeur est programmé pour ne plus tenir compte des nouvelles diffusions. Si un événement est récurrent, le décodeur compare le numéro de version diffusé avec celui inscrit dans le tableau des sélections. Si un événement dont l'identifiant correspond à celui d'un enregistrement mais dont la version est différente de celle enregistrée est diffusé, alors il doit être enregistré. Dans ce cas, l'événement précédemment en mémoire est effacé et la valeur de version dans le tableau des sélections est mise à jour. C'est le cas par exemple, du « Journal de 20 heures » ou des « Prévisions Météorologiques » comme le montre le tableau à la figure 4,

Si la sélection a été faite par une plage horaire, l'événement diffusé à ce moment est considéré par le décodeur comme n'ayant pas de version.

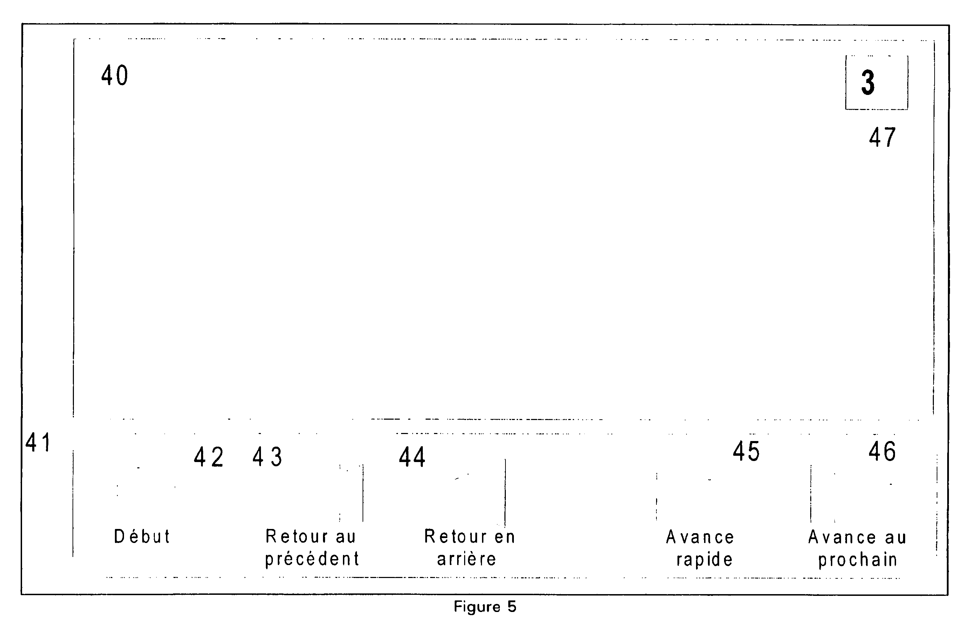

Pour visualiser le contenu d'une chaîne personnalisée, l'utilisateur appuie sur la touche « LECTURE CHAINE » ce qui lance le logiciel de visualisation. Le logiciel affiche sur l'écran un menu de présentation de toutes les chaînes disponibles dans le décodeur en précisant pour chacune le nombre de sélections pour lesquelles il y a en mémoire un enregistrement disponible. L'utilisateur sélectionne une chaîne, l'écran représenté à la figure 5 est alors affiché. Cet écran comprend deux éléments : le premier enregistrement de la liste des sélections, visualisé sur la partie supérieure de l'écran (40) et un bandeau de fonction (41) apparaissant en bas de l'écran. Ce bandeau comprend cinq icônes correspondant aux fonctions de base. Le premier (42) permet à l'utilisateur de visualiser le premier enregistrement de la chaîne personnalisée. Le second (43) et le cinquième (46) permettent de sélectionner ou de visualiser l'enregistrement qui précède ou suit celui en cours dans la liste des sélections. Le troisième (44) et le quatrième (45) permettent de revenir en arrière et d'avancer plus rapidement. D'autres fonctions non représentées sur la figure 5 sont également possibles telles que l'arrêt sur image, la coupure du son, l'accès à des éléments d'interactivité mémorisés en même temps que l'enregistrement, ...etc.

De même que pour l'étape de configuration, un premier mode de réalisation consiste en ce que la télécommande soit dotée de touches de fonction. Un second mode comprend l'activation des fonctions à l'aide d'icônes sélectionnés sur l'écran à l'aide des flèches et de la touche « VALIDATION ».

Le numéro de l'enregistrement (47) en cours de visualisation apparaît en haut à gauche de l'écran. Le numéro et le bandeau peuvent disparaître en appuyant sur une touche de fonction.

Le logiciel de visualisation fonctionne de la façon suivante. Dès que l'utilisateur a tapé l'identifiant IDENT. le logiciel recherche dans le tableau la valeur de IDENT et obtient l'adresse Adr_ZONE_Ci et le nombre de sélections de cette chaîne. Il initialise une variable représentée par un registre en mémoire de travail appelé « NUM » avec la valeur « 1 ». Cette variable représente le numéro d'ordre de la sélection en cours de visualisation. Si l'utilisateur l'a demandé, cette variable est affichée sur l'écran. Le logiciel recherche ensuite dans le tableau des sélections l'adresse et la durée du premier enregistrement. Il initialise un pointeur de lecture de l'enregistrement avec la valeur d'adresse ADR_Evi.j, et visualise les données lues. Si le logiciel reçoit une commande correspondante aux icônes 43 ou 46, il lit l'élément suivant ou l'enregistrement précédent dans le tableau et visualise l'enregistrement correspondant. De ce fait, il ajoute ou retranche une unité à la variable NUM. Si le logiciel reçoit une commande correspondant aux icônes 43 ou 44, la lecture est accélérée ou la valeur du pointeur est diminuée ce qui permet de visualiser rapidement l'enregistrement en marche arrière. Si le logiciel reçoit la commande correspondant à l'icône 42, il repointe sur le premier enregistrement de la liste des sélections.

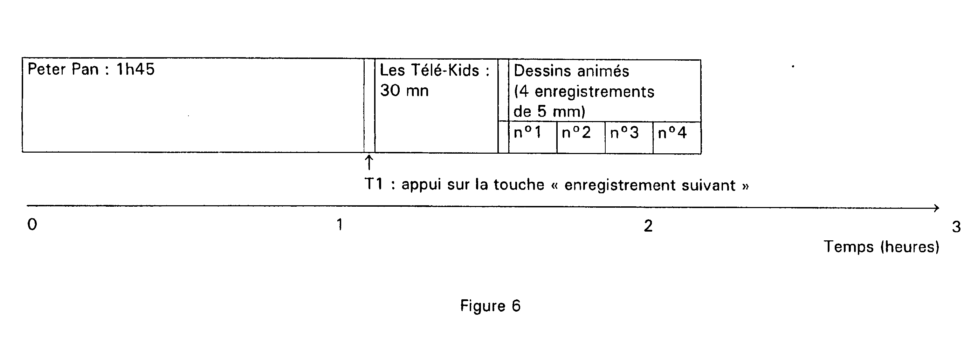

La figure 6 montre la visualisation de la chaîne personnalisée numéro 1 au cours du temps. Au moment marqué T1, l'utilisateur a sélectionné la commande pour lire l'enregistrement suivant, écourtant de ce fait la visualisation du film « Peter Pan » et faisant aussitôt apparaître le début de l'émission « Les Télé-Kids ». En dernier, quatre dessins animés sont affichés d'une durée totale de 20 minutes. A la fin des 20 minutes, l'écran re-visualise le premier enregistrement : Peter Pan.

En variante, le décodeur étant doté d'une liaison bidirectionnelle qui lui permet de se connecter à un réseau, il peut télécharger du réseau des séquences vidéo. Ces séquences sont enregistrées dans le disque dur à l'aide d'une routine de téléchargement. Elles apparaissent dans le menu de configuration avec un élément distinctif. Il est aussi possible de sélectionner une plage horaire en spécifiant une adresse de réseau à la place d'une référence de service. A l'heure indiquée, le décodeur établit une connexion à l'adresse indiquée et télécharge la séquence. Si la référence du service est une URL ("Universal Resource Locator") cette séquence vidéo peut par exemple être une page HTML.

L'invention n'est bien sûr pas limitée aux modes de réalisation qui viennent d'être décrits. En particulier, la technologie de la mémoire des enregistrements peut être optique (DVD-ROM, CD-ROM enregistrable par exemple), magnétique (cartouche), ou d'une technologie équivalente.

## Revendications

1. Procédé de visualisation d'émissions audiovisuelles, les dites émissions étant préalablement diffusées à partir d'un central de diffusion, reçues dans un récepteur de télévision numérique et enregistrées dans une mémoire associée au dit récepteur,
**caractérisé en ce qu'**il comporte au sein du récepteur une étape d'introduction par l'utilisateur d'une liste d'émissions, et d'un ordre au sein de la liste qui définit l'ordre de visualisation des émissions, une étape de réception et d'enregistrement d'au moins une émission identifiée lors de l'étape d'introduction, et une étape de visualisation des émissions dans l'ordre défini selon la liste introduite par l'utilisateur.

2. Procédé de visualisation d'émissions audiovisuelles selon la revendication 1, **caractérisé en ce que** l'étape de configuration consiste à affecter un numéro d'ordre à chaque émission de la liste séquentielle.

3. Procédé de visualisation d'émissions audiovisuelles selon la revendication 1 ou 2, **caractérisé en ce que** l'étape de configuration comporte une étape de présentation à l'utilisateur de l'identifiant d'au moins une pluralité de données dont la diffusion est annoncée, une étape de sélection par l'utilisateur d'un ensemble de donnée au sein de la pluralité, et une étape de création de la liste séquentielle d'émissions.

4. Procédé de visualisation d'émissions audiovisuelles selon la revendication 1 ou 2, **caractérisé en ce que** l'étape de visualisation comporte les étapes successives suivantes :
- visualisation d'une émission enregistrée,
- détection d'une commande fournie par l'utilisateur,
- en réponse à la dite commande, recherche d'une émission située séquentiellement juste avant ou juste après celle visualisée,
- visualisation de l'émission trouvée.

5. Procédé de visualisation d'émissions audiovisuelles selon la revendication 1 ou 2, **caractérisé en ce que** les dites émissions sont référencées par un identificateur et un indicateur de mise à jour, et **en ce qu'**il comporte en outre une étape d'enregistrement en mémoire de l'identificateur et de l'indicateur de mise à jour activée lors de l'enregistrement de l'émission diffusée, et une étape d'enregistrement d'une émission diffusée référencé par le même identificateur et dont la valeur de l'indicateur de mise à jour est différente de celle de l'émission diffusée.

6. Procédé de visualisation d'émissions audiovisuelles selon la revendication 5, **caractérisé en ce que** l'indicateur de mise jour est un numéro de version donné par le central de diffusion.

7. Procédé de visualisation d'émissions audiovisuelles selon la revendication 3, **caractérisé en ce que** la sélection des données s'effectue par le titre d'une donnée diffusée, par un thème ou par une plage horaire associée à une référence de service.

8. Procédé de visualisation d'émissions audiovisuelles selon l'une quelconque des revendications précédentes, **caractérisé en ce qu'**il contient une étape d'introduction d'un numéro de liste séquentielle.

9. Récepteur d'émissions audiovisuelles numériques comprenant un moyen de réception (2, 3, 4, 5) de données diffusées à partir d'un réseau dont au moins les dites émissions audiovisuelles et des identificateurs des dites émissions,
**caractérisé en ce qu'**il comporte :
un moyen d'introduction (11, 22) par l'utilisateur d'une liste d'émissions, et d'un ordre au sein de la liste qui définit l'ordre de visualisation des émissions,
un moyen d'enregistrement (25,26) des émissions ainsi listées et des éléments de chaînage séquentiel des émissions enregistrées selon l'ordre établi par ladite liste,
et un moyen de visualisation (17, 20) des émissions dans l'ordre défini selon ladite liste introduite par l'utilisateur.

10. Récepteur d'émissions audiovisuelles selon la revendication 9, **caractérisé en ce qu'**il comporte en outre un moyen d'affichage de l'identificateur d'au moins une émission diffusée, et un moyen de sélection par l'utilisateur d'au moins cet identificateur en vue de l'enregistrement de l'émission dans la liste séquentielle des enregistrements.

11. Récepteur d'émissions audiovisuelles selon la revendication 9, **caractérisé en ce qu'**il comporte en outre un moyen de détection de la variation d'une valeur d'indicateur de mise à jour, le dit moyen de détection déclenchant un moyen de mise à jour de l'enregistrement.

12. Récepteur d'émissions audiovisuelles selon la revendication 9, **caractérisé en ce qu'**il comporte en outre un moyen d'introduction d'une durée maximum d'enregistrement et **en ce que** le moyen d'enregistrement s'arrête lorsqu'une durée maximum d'enregistrement est atteinte.

13. Récepteur d'émissions audiovisuelles selon la revendication 9, **caractérisé en ce qu'**il comporte en outre un moyen de sélection de l'enregistrement précédant ou succédant à celui en cours de visualisation, le dit moyen de sélection déclenchant la visualisation de l'enregistrement sélectionné.

14. Récepteur d'émissions audiovisuelles selon l'une quelconque des revendications de 9 à 13 **caractérisé en ce que** l'élément de chaînage comporte un numéro d'ordre associé à chaque enregistrement.

15. Récepteur d'émissions audiovisuelles selon la revendication 14 **caractérisé en ce qu'**il comporte un moyen d'affichage du numéro d'ordre de l'enregistrement en cours de visualisation.

## Claims

1. A process for displaying audiovisual transmissions, said transmissions having previously been broadcast from a broadcasting center, received in a digital television receiver and recorded in a memory associated with said receiver,
**characterized in that** it comprises within the receiver a step of entry by the user of an ordered list of transmissions and an order within the list defining the order of displaying the transmission, a step of reception and of recording of at least one transmission identified during the entry step and a step of displaying the transmissions in the order defined according to the list introduced by the user.

2. The process for displaying audiovisual transmissions as claimed in claim 1, **characterized in that** the configuring step consists in assigning a serial number to each transmission of the sequential list.

3. The process for displaying audiovisual transmissions as claimed in claim 1 or 2, **characterized in that** the configuring step comprises a step of presentation to the user of the identifier of at least one plurality of data whose broadcasting is announced, a step of selection by the user of a set of data within the plurality, and a step of creating the sequential list of transmissions.

4. The process for displaying audiovisual transmissions as claimed in claim 1 or 2, **characterized in that** the displaying step comprises the following successive steps:
- displaying of a recorded transmission,
- detection of a command supplied by the user,
- in response to said command, search for a transmission situated sequentially just before or just after the one displayed,
- displaying of the transmission found.

5. The process for displaying audiovisual transmissions as claimed in claim 1 or 2, **characterized in that** said transmissions are referenced by an identifier and an update indicator, and **in that** it furthermore comprises a step of recording in memory the identifier and the update indicator, which step is activated during the recording of the broadcast transmission, and a step of recording a broadcast transmission, which recording is referenced by the same identifier and the value of whose update indicator is different from the value of the broadcast transmission.

6. The process for displaying audiovisual transmissions as claimed in claim 5, **characterized in that** the update indicator is a version number given by the broadcasting center.

7. The process for displaying audiovisual transmissions as claimed in claim 3, **characterized in that** the selection of the data is performed via the title of a broadcast data item, via a topic or via a timeslot associated with a service reference.

8. The process for displaying audiovisual transmissions as claimed in any one of the preceding claims, **characterized in that** the configuring step contains a step of entering a sequential list number.

9. A receiver of digital audiovisual transmissions comprising a means (2, 3, 4, 5) for receiving data broadcast from a network and including at least said audiovisual transmissions and identifiers of said transmissions,
**characterized in that** it comprises:
a means of entry (11, 22) by the user of an ordered list of transmissions and an order within the list that defines the order of displaying of the transmissions,
a recording means (25, 26) of listed transmissions and elements for sequential chaining of the recorded transmissions according to the order defined by said list,
and a means of displaying (17, 20) the transmissions in the order defined according to said list introduced by the user.

10. The receiver of audiovisual transmissions as claimed in claim 9, **characterized in that** it furthermore comprises a means of display of the identifier of at least one broadcast transmission, and a means of selection by the user of at least this identifier with a view to the recording of the transmission in the sequential list of recordings.

11. The receiver of audiovisual transmissions as claimed in claim 9, **characterized in that** it furthermore comprises a means of detection of the variation of a value of update indicator, said means of detection triggering a means of updating the recording.

12. The receiver of audiovisual transmissions as claimed in claim 9, **characterized in that** it furthermore comprises a means of entry of a maximum duration of recording and **in that** the means of recording stops when a maximum duration of recording is reached.

13. The receiver of audiovisual transmissions as claimed in claim 9, **characterized in that** it furthermore comprises a means of selection of the recording preceding or succeeding the one currently being displayed, said means of selection triggering the displaying of the selected recording.

14. The receiver of audiovisual transmissions as claimed in any one of claims 9 to 13, **characterized in that** the chaining element comprises a serial number associated with each recording.

15. The receiver of audiovisual transmissions as claimed in claim 14, **characterized in that** it comprises a means of display of the serial number of the recording currently being displayed.

## Patentansprüche

1. Verfahren zur Sichtbarmachung von audiovisuellen Sendungen, wobei die Sendungen zuvor von einem Sendezentrum ausgestrahlt, in einem digitalen Fernsehempfänger empfangen und in einen zu dem Empfänger gehörigen Speicher aufgenommen werden,
**dadurch gekennzeichnet, dass** es innerhalb des Empfängers einen Schritt der Eingabe durch den Benutzer einer Liste von Sendungen und einer die Reihenfolge der Sichtbarmachung der Sendungen bestimmenden Reihenfolge innerhalb der Liste, einen Schritt des Empfangens und Aufnehmens von mindestens einer bei dem Schritt der Eingabe identifizierten Sendung und einen Schritt der Sichtbarmachung der Sendungen in der gemäß der von dem Benutzer eingegebenen Liste bestimmten Reihenfolge aufweist.

2. Verfahren zur Sichtbarmachung von audiovisuellen Sendungen nach Anspruch 1, **dadurch gekennzeichnet, dass** der Konfigurationsschritt darin besteht, jeder Sendung der sequentiellen Liste eine Ordnungsnummer zuzuordnen.

3. Verfahren zur Sichtbarmachung von audiovisuellen Sendungen nach Anspruch 1 oder 2, **dadurch gekennzeichnet, dass** der Konfigurationsschritt einen Schritt, der darin besteht, dem Benutzer die Kennung von mindestens einer Mehrzahl von Daten, deren Ausstrahlung angekündigt ist, zu präsentieren, einen Schritt der Auswahl einer Menge von Daten innerhalb der Mehrzahl durch den Benutzer sowie einen Schritt der Erstellung der sequentiellen Liste von Sendungen aufweist.

4. Verfahren zur Sichtbarmachung von audiovisuellen Sendungen nach Anspruch 1 oder 2, **dadurch gekennzeichnet, dass** der Schritt der Sichtbarmachung die folgenden sukzessiven Schritte aufweist:
- Sichtbarmachung einer aufgenommenen Sendung,
- Erfassen eines von dem Benutzer gegebenen Befehls,
- in Reaktion auf den Befehl: Suchen nach einer Sendung, die sich sequentiell gerade vor oder gerade nach der sichtbar gemachten Sendung befindet,
- Sichtbarmachung der gefundenen Sendung.

5. Verfahren zur Sichtbarmachung von audiovisuellen Sendungen nach Anspruch 1 oder 2, **dadurch gekennzeichnet, dass** die Sendungen durch eine Kennung und einen Aktualisierungsanzeiger referenziert sind und dass es ferner einen Schritt der Aufnahme der Kennung und des Aktualisierungsanzeigers in einen Speicher aufweist, wobei dieser Schritt bei der Aufnahme der ausgestrahlten Sendung aktiviert wird, und einen Schritt der Aufnahme einer ausgestrahlten Sendung, der durch dieselbe Kennung referenziert ist und bei dem der Wert des Aktualisierungsanzeigers anders ist als derjenige der ausgestrahlten Sendung.

6. Verfahren zur Sichtbarmachung von audiovisuellen Sendungen nach Anspruch 5, **dadurch gekennzeichnet, dass** der Aktualisierungsanzeiger eine Versionsnummer ist, die von dem Sendezentrum vorgegeben ist.

7. Verfahren zur Sichtbarmachung von audiovisuellen Sendungen nach Anspruch 3, **dadurch gekennzeichnet, dass** die Datenauswahl über den Titel eines ausgestrahlten Datums, über ein Thema oder über einen zu einer Dienstreferenz gehörigen Zeitbereich erfolgt.

8. Verfahren zur Sichtbarmachung von audiovisuellen Sendungen nach einem der vorhergehenden Ansprüche, **dadurch gekennzeichnet, dass** es einen Schritt der Eingabe einer Nummer einer sequentiellen Liste enthält.

9. Empfänger von digitalen audiovisuellen Sendungen mit einem Mittel zum Empfangen (2, 3, 4, 5) von Daten, die von einem Netz aus ausgestrahlt werden, darunter mindestens den audiovisuellen Sendungen und Kennungen der Sendungen,
**dadurch gekennzeichnet, dass** er Folgendes umfasst:
- ein Mittel für die Eingabe (11, 12) durch den Benutzer einer Liste von Sendungen und einer die Reihenfolge der Sichtbarmachung der Sendungen bestimmenden Reihenfolge innerhalb der Liste,
- ein Mittel zum Aufnehmen (25, 26) der derart gelisteten Sendungen und der Elemente sequentieller Verknüpfung der aufgenommenen Sendungen in der durch die Liste festgelegten Reihenfolge und
- ein Mittel zur Sichtbarmachung (17, 20) der Sendungen in der gemäß der von dem Benutzer eingegebenen Liste bestimmten Reihenfolge.

10. Empfänger von audiovisuellen Sendungen nach Anspruch 9, **dadurch gekennzeichnet, dass** er ferner ein Mittel zum Anzeigen der Kennung von mindestens einer ausgestrahlten Sendung und ein Mittel zum Auswählen von mindestens dieser Kennung durch den Benutzer in Hinblick auf die Aufnahme der Sendung in die sequentielle Liste der Aufnahmen aufweist.

11. Empfänger von audiovisuellen Sendungen nach Anspruch 9, **dadurch gekennzeichnet, dass** er ferner ein Mittel zum Erfassen der Variation eines Wertes eines Aktualisierungsanzeigers aufweist, wobei das Erfassungsmittel ein Mittel zur Aktualisierung der Aufnahme auslöst.

12. Empfänger von audiovisuellen Sendungen nach Anspruch 9, **dadurch gekennzeichnet, dass** er ferner ein Mittel für die Eingabe einer maximalen Aufnahmedauer aufweist und dass das Aufnahmemittel anhält, wenn eine maximale Aufnahmedauer erreicht ist.

13. Empfänger von audiovisuellen Sendungen nach Anspruch 9, **dadurch gekennzeichnet, dass** er ferner ein Mittel zum Auswählen der Aufnahme, die der momentan gerade sichtbar gemachten Aufnahme vorangeht oder folgt, aufweist, wobei das Auswahlmittel die Sichtbarmachung der ausgewählten Aufnahme auslöst.

14. Empfänger von audiovisuellen Sendungen nach einem der Ansprüche 9 bis 13, **dadurch gekennzeichnet, dass** das Verknüpfungselement eine zu jeder Aufnahme gehörigen Ordnungsnummer aufweist.

15. Empfänger von audiovisuellen Sendungen nach Anspruch 14, **dadurch gekennzeichnet, dass** er ein Mittel zum Anzeigen der Ordnungsnummer der momentan gerade sichtbar gemachten Aufnahme aufweist.
